# EUROPEAN PATENT APPLICATION

(11) **EP 1 942 694 A1**
(43) Date of publication of application: **09.07.2008**
(21) Application number: 07290004.6
(22) Date of filing: 02.01.2007
(51) Int. Cl.: H04Q 7/38, H04L 29/12

(54) **Mobile telecommunications system and method**

(71) Applicant: France Télécom, 75015 Paris Cedex 15 (FR)
(72) Inventor: Reynolds, Paul, Easton, Wells BA5 1AT (GB); McCord, Liz, c/o France Telecom, Chiswick W4 5XS (GB); Clarkson, Nicky, Bedminster, Bristol, BS3 3NP (GB); Khan, Suhail, Bristol, BS8 1AH (GB)
(74) Representative: DeVile, Jonathan Mark

(57) **Abstract**

A mobile telecommunications system includes a mobile communications network operable to provide a facility for mobile terminals to communicate via a plurality of inter-connected access points. The system includes a first mobile terminal operable to initiate a communications session with a second mobile terminal by sending a communication initiation message with an identification of the second mobile terminal to the mobile communications network via a first of the plurality of access points to which the first mobile terminal is attached. The mobile communications network is operable to communicate the communication initiation message to the second mobile terminal via the first or a second of the plurality of access points to which the second mobile terminal is attached. The second mobile terminal is responsive to the communication initiation message, to communicate a location identifier, identifying the location of the second mobile terminal, when attached to the first or the second access point of the mobile communications network, to the first mobile terminal. The first mobile terminal is operable to store the location identifier of the first or second access point of the mobile communications network to which the second mobile terminal is attached in association with an identification of the second mobile terminal, for locating the second mobile terminal when initiating subsequent communications sessions.

Embodiments of the present invention can provide a mobile communications network, which does not need to include a centralised repository of subscriber information or a centralised store of a current location of each mobile subscriber, within the network such as an HLR or an HSS.

## Description

### Field of Invention

The present invention relates to mobile telecommunications systems which are arranged to provide a mobile communications facility to mobile terminals, and to methods of providing a communications facility to mobile terminals via a plurality of inter-connected access points of a mobile communications network.

### Background of the Invention

Mobile telecommunications networks can be typically considered to be comprised of two functional parts; the radio network and the core network. The radio network includes network elements which are directly involved in radio communication with mobile devices. Those skilled in the art will be familiar with examples of the radio network elements according to the GSM/GPRS standard such as base stations, base station controllers (BSCs) and mobile switching centres (MSCs). The core network includes network elements which control and administer the network. Again, those skilled in the art will be familiar with examples from the GSM/GPRS standard including gateway support nodes such as the SGSN and the GGSN, and the Home Location Register (HLR). The HLR forms part of most mobile telecommunication networks and performs two fundamental functions in the core network:
- Maintaining a list of users who subscribe to the mobile telecommunication network (i.e. a network operators customers) and the network services to which they are allowed access.
- Maintaining information regarding the location of each subscriber, so that a call can be routed to the subscribers' mobile terminal.
   Within mobile communications networks such as GSM and GPRS, one of the most high performance and therefore expensive elements is the Home Location Register (HLR). This is because the HLR must at all times maintain real-time or near real-time data base providing the location of all mobile terminals in a mobile communications network and the subscriber information for all mobile terminals. As a result, the HLR suffers from a number of drawbacks. In particular, arranging the HLR as a single entity, either logically or physically, is both costly and inefficient. Under most circumstances, each interaction a subscriber's device has with the mobile telecommunications network will have to be communicated to the HLR in one way or another. Therefore an HLR must be both large enough to provide memory space for all the necessary data associated with each subscriber, and have sufficient processing power to retrieve and change such data in real or near real time. As one skilled in the art will appreciate, the larger the data storage and the faster the memory access, the more costly that data storage will be. Centrally locating network elements like the HLR within the core network leads to further disadvantages. There is a problem of resilience. For example, if the HLR fails, the entire network fails. Also, a network operator who is committed to a central HLR is committed to routing a great deal of traffic through its own centralised networks. This means it is more difficult to take full advantage of improvements and advances in network technology which support more distributed routing such as IPv6 and Mobile IP. Thus a need has been identified to simplify the core network.
   US 2003/0100302 proposes providing a distributed HLR as well as a network HLR. The distributed HLR which is referred to as a personal HLR proposes storing subscription and roaming information for a subscriber. Thus the information which is normally stored within the HLR is distributed to the personal HLR. The network HLR is still required in order to route calls to the mobile terminals.

### Summary of the Invention

According to the present invention there is provided a mobile telecommunications system, comprising a mobile communications network operable to provide a facility for mobile terminals to communicate via a plurality of inter-connected access points and a first mobile terminal operable to initiate a communications session with a second mobile terminal. The first mobile terminal is arranged to send a communication initiation message with an identification of the second mobile terminal to the mobile communications network via a first of the plurality of access points to which the first mobile terminal is attached. The mobile communications network is operable to communicate the communication initiation message to the second mobile terminal via the first or a second of the plurality of access points to which the second mobile terminal is attached. The second mobile terminal is responsive to the communication initiation message, to communicate a location identifier, identifying the location of the second mobile terminal, when attached to the first or the second access point of the mobile communications network, to the first mobile terminal. The first mobile terminal is operable to store the location identifier of the first or the second access point of the mobile communications network to which the second mobile terminal is attached in association with an identification of the second mobile terminal, for locating the second mobile terminal when initiating subsequent communications sessions.

Embodiments of the present invention can provide a mobile communications network, which does not need to include a centralised repository of subscriber information or a centralised store of a current location of each mobile subscriber, within the network. For the example of a GSM or GPRS network, the present invention provides a technique which can allow mobile communications networks to operate without the Home Location Register (HLR). For other examples, such as an Internet protocol Multi-media Sub-system (IMS), the present invention can provide techniques, which can allow the removal of the Home Subscriber Server (HSS).

Without an HLR or equivalent function, most conventional mobile communication network would be rendered unusable. Firstly, there would be no means of locating subscribers for optimising the routing of data and secondly there would be no means of maintaining a list of subscribers, centrally controlling to what services the subscribers have access and billing them accordingly. Therefore, it is desirable to remove the HLR from a mobile telecommunications network in order to simplify the network. However, in order to remove the HLR, the *functionality* of the HLR must be replaced by alternative means.

In addition to storing information about the subscriber which would normally be stored in the HLR, embodiments of the present invention provide an arrangement, which allows the mobile terminals in the mobile communications network to self locate. That is to say that rather than having an element in the mobile communications network to maintain the location of each of the mobile terminals, the mobile terminals are arranged to maintain a location of the mobile terminals in the network. If each mobile terminal were to maintain the location of every other mobile terminal in the mobile communications network, then this would represent a considerable amount of data and a substantial amount of signalling traffic would be required. However, embodiments of the present invention are arranged to maintain the location of mobile terminals, which a mobile terminal has made a call. This is because users of the mobile communications network are only likely to place or receive a call or initiate a communications session with a relatively small sub-set of all mobile terminals which are attached to the mobile communications network. Furthermore mobile terminals tend to be nomadic rather than mobile in the sense that mobile terminals will typically move on average between a relatively small number of locations. Accordingly, by storing the location address within the mobile communications network of the called mobile terminal in association with a calling mobile terminal after a call initiation message has been sent from the calling mobile terminal to the called mobile terminal, that calling mobile terminal will then have the location of the called mobile terminal for future calls. Each mobile terminal may therefore establish a community of mobile terminals of which it is part and include the location address of each mobile terminal in its community in a stored associated with it. A mobile terminal will therefore place a call to another mobile terminal at a last known location of the mobile terminal.

According to an aspect of the present invention there is provided a mobile telecommunications system, comprising one or more mobile communications networks, each of the mobile communications networks including a plurality of access points, an identification server, and one or more mobile terminals. Each of the one or more mobile terminals are operable to communicate data via the plurality of access points. Each of the one or more mobile terminals includes a subscriber identity module, the subscriber identity module having stored thereon subscriber information associated with a user of the mobile terminal. The identification server is arranged to store for each of the subscriber identity modules an internet protocol address of the subscriber information stored on the subscriber identity module of each of the mobile terminals, and for each of the subscriber identity modules a resource locator, the resource locator being stored in association with the internet protocol address of the subscriber information on the subscriber identity module for accessing the subscriber information using the resource locator referred to the identification server, which provides the internet protocol address of the subscriber information.

Embodiments of this aspect of the present invention can provide for mobility management to a mobile telecommunications network in which subscriber information which is normally stored on a central entity, such as for example an HLR. The mobile location functionality which is necessarily a part of a mobile communications network is provided by associating the subscriber identity module (SIM) with a resource locator, such as a Universal Resource Locator (URL). The identification server, may be for example a Domain Name System (DNS) server. The identification server provides mobility management by storing an internet protocol address of the subscriber information on the SIM in association with the resource locator, so that the subscriber information can be accessed by referring to the resource locator. The resource locator points to the identification server (DNS server) which provides the internet protocol address of the subscriber information.

According to some example embodiments, once an association has been made within with the DNS server of a URL with a SIM, existing IP/DNS functionality ensures that wherever a mobile terminal may find itself, its IP address, once allocated by an access point is reported back to and managed by the DNS server. As the DNS server associates a URL with the SIM, full mobility and subscriber information management can be provided.

Various further aspects and features of the present invention are defined in the appended claims.

### Brief Description of the Drawings

Embodiments of the present invention will now be described by way of example only with reference to the accompanying drawings where like parts are provided with corresponding numerals and in which:
Figure 1 shows a simplified representation of a mobile telecommunications according the 3GPP standard;
Figure 2 shows a simplified representation of a mobile telecommunications according the 3GPP standard including a SIM according to the present technique;
Figure 3 shows an example of a mobile telecommunication network according to the present technique including location caching;
Figure 4 shows an example of a mobile telecommunication network according to the present technique including location caching;
Figure 5 shows a flow diagram with the operations performed by a mobile terminal to initiate a call with another mobile terminal according to the scheme in Figures 3 and 4.
Figure 6 shows an example of a mobile telecommunication network according to the present technique including anchor points;
Figure 7 shows an example of a mobile telecommunication network according to the present technique including anchor points;
Figure 8 shows the process for initiating a call by mobile terminal B to mobile terminal A according to the scheme in Figures 6 and 7;
Figure 9 shows a conventional arrangement of an IMS sub-system;
Figure 10 shows an adapted serving call state control function and an adapted proxy call state control system according to the present technique;
Figure 11 shows a simplified mobile packet communication network using a DNS server according to the present technique;
Figure 12 shows a process by which a communication session is established between two mobile terminals according to the simplified network shown in Figure 11;
Figure 13 shows a simplified mobile packet communication network including two access points;
Figure 14 shows a process by which an IP address of a mobile terminal is updated to the simplified network shown in Figure 11;
Figure 15 shows a simplified IP network in which a user can accesses an IP address according to a SIM associated with a URL;
Figure 16 is a schematic block diagram of a communications terminal which is arranged to communicate via different access networks in accordance with the present technique;
Figure 17 is another example schematic block diagram of a communications terminal which is arranged to utilise different communications services in accordance with the present technique; and
Figure 18 shows a process according to which a client ascertains the IP address associated with a URL.

### Description of Example Embodiments

Three example adaptations of a mobile communications system will be now be described. The first example, location caching, involves adapting mobile terminals and/or access points to the network to retain and manage information regarding the location of the mobile terminal without reliance on a central HLR. This is achieved by storing user profile information and authentication information in the mobile terminal, for example on the SIM and the mobile terminals are arranged to be self locating. An example application of this technique to Internet Protocol Multi-media sub-systems (IMS) is also explained.

In the second example, URL Associated SIM, a user's unique identifier (typically the SIM) is associated with an internet URL and combined with an adapted DNS server. This system provides a means for managing subscriber data and location without reliance on a central HLR.

In the third example, SIM based services, an authorisation interface is provided in a mobile terminal which creates an interface between the physical layer and the application layer. Providing an authorisation interface, to allow conditional access to communications services, a network operator is able to control access to its network services without having to maintain data in an HLR indicating which services individual users have been granted access to.

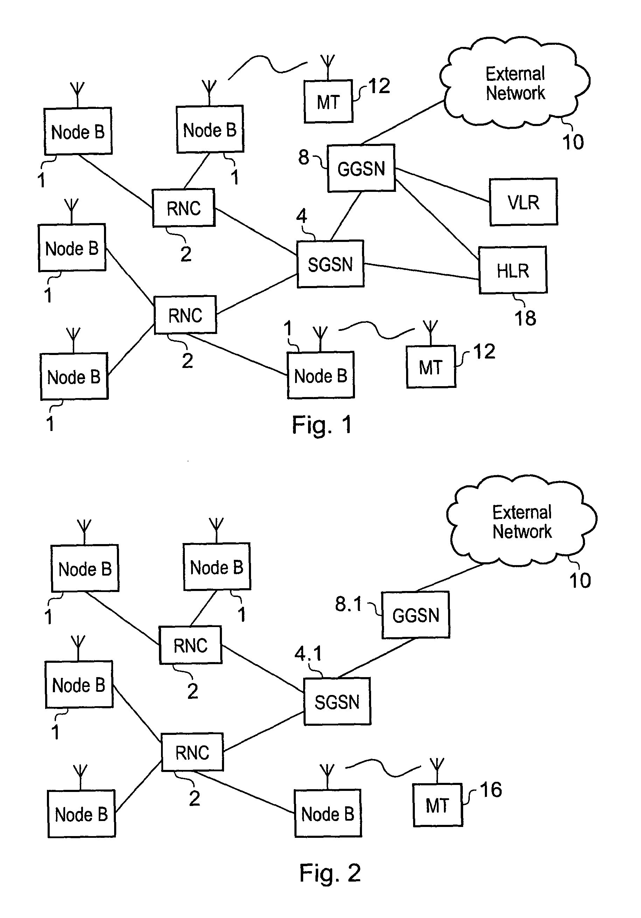

As explained above one of the most complicated elements within a UMTS/GPRS network is the Home Location Register (HLR). An example illustration of a UMTS/GPRS network is shown in Figure 1. In Figure 1 base stations which are referred to as Node Bs in UMTS/GPRS terminology 1 are connected to radio network controllers 2 which together form part of a radio network part of the GPRS/UMTS communications network. The radio network controllers (RNC) 2 are connected to a serving GPRS support node 4 which is also connected to a GPRS gateway support node 8. The GGSN 8 operates as a gateway function to the mobile communications network performed by the UMTS/GPRS standard and so the GGSN 8 is connected to an external network 10 for communicating data to and from entities outside the mobile communications network. Figure 1 includes an HLR 18 which is connected to the SGSN 4 and the GGSN 8. The HLR conventionally stores user profile information and user preferences as well as information associated with charging the user of the mobile terminals for communication sessions either initiated by other terminals. In addition the HLR 18 performs a function of storing a current location of mobile terminals 12 within the mobile communications network. Thus for example in Figure 1 the HLR 18 includes an indication of a current node b or base station to which the mobile terminal is attached. Thus when a call is to be placed to the mobile terminal the GGSN receives the call with an identifier of the mobile terminal which is to receive the call. The identifier is conventionally an International Mobile Subscriber Identifier (IMSI) or other identifier such as the Mobile Subscriber Identity Number (MSISDN). The GGSN 8 then interrogates the HLR 18 to retrieve the current location of the mobile terminal identified by the mobile terminal identifier. The location identifier of the mobile terminal is then retrieved from the HLR which, from the example shown in Figure 1, would be a code for the Node B to which the mobile terminal is currently attached. Thus the GGSN can route a call to the mobile terminal via the SGSN and the RNC to the appropriate Node B in order to complete the set up of the communications session. Thus at any one time the HLR 18 must include an identifier of the location of the mobile terminals 12. As will be appreciated therefore the HLR 18 represents a complicated and extremely large database because each mobile terminal which has subscribed to the mobile network must have memory space within the HLR. Furthermore, accessing data stored in the HLR must occur in near real time. More detail of the architecture of the UMTS GPRS mobile communications system can be found in R. Steele, C-C Lee and P.Gould, "GSM, CdmaOne and 3G Systems," published by Wiley International ISBN 0 471 491853.

Figure 2 provides an illustrative example of the present technique applied to the GPRS/UMTS network shown in Figure 1. The mobile communications network shown in Figure 2 corresponds to that shown in Figure 1 but provides an illustration of the present technique in which the HLR is removed from the mobile communications network. As indicated above, the HLR performs two functions which are firstly to store subscriber information associated with a user profile and an indication of the services to which the mobile terminals have subscribed. Secondly the HLR provides a subscriber location database identifying the current location of the mobile terminals within the mobile communications network. Embodiments of the present technique arrange for two functions which are performed by the HLR in a conventional mobile communication network to be performed without an HLR.

### Location Caching

In accordance with the present technique, the mobile terminals of a mobile communications system are adapted to
- Store the subscriber information such as the user profile and the communications services as well as any other information associated with billing within the mobile terminals. In one example the subscriber information is stored in the subscriber identity module (SIM) of the mobile terminal, and
- The mobile terminals are arranged to be self-locating by including a cache or a data store which provides a store of an identifier of mobile terminals to which the mobile terminal may call and a location identifier identifying a current location of that mobile terminal.

As will be appreciated in some examples the self locating arrangement of the mobile terminals may be implemented separately from the stored user profile information in the SIM.

In one example, the location identifier of a mobile terminal within the mobile communications network, such as an address of an access point where the mobile terminal is attached, may be stored in association with an identifier of that mobile terminal within the access point or in a cache within the mobile terminal itself.

If a call is made to a mobile terminal for which the location address in the mobile communications network is unknown, then the mobile communications network can be arranged to send a paging message to the mobile terminal from one or more access points in the mobile communications networks. If the mobile terminal to which the call initiation message is being sent responds to the paging message to accept the call attempt, then the called mobile terminal will provide the calling mobile terminal with its location address. Thereafter, the calling mobile will know the called mobile terminals location address.

With respect to the GSM/GPRS standard, the location identifier is a sub-net address identifying the base station or access point address with which the mobile terminal is affiliated.

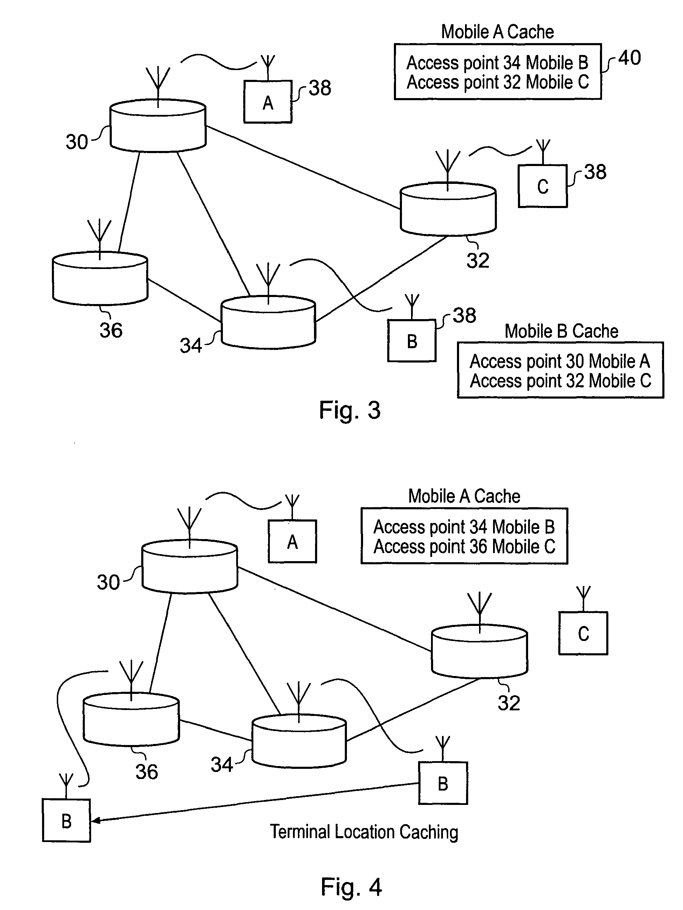

An illustrative example of the present technique applied more generally to access points within a mobile communications network is illustrated in Figures 3 and 4. Figures 3 and 4 provide a general illustration of an example of the present technique which allows the mobile terminals within a mobile communications network to be self-locating. To this end, each mobile terminal includes a data store or a cache referred to as a location cache in the following description which contains the last location of mobile terminals which that mobile terminal have called. As shown in Figure 3 a plurality of access points 30, 32, 34, 36 are inter-connected to form a mobile communications network. The access points may be, for example, "WiFi" (IEEE802.11) or in one example the access points are the Node Bs of the GPRS network of Figures 1 and 2. Thus, alternatively the access points could be base stations of a mobile telecommunications network. As shown in Figure 3 mobile terminals 38 which are designated A, B and C communicate with each other via the access points, 30, 32, 34, 36. Thus, mobile terminal A is currently affiliated with access point 30, mobile terminal B is currently affiliated with access point 34 and mobile terminal C is currently affiliated with access point 32. In accordance with the present technique the mobile terminals A, B and C are self-discovering or self-locating. Thus each mobile terminal includes a location cache providing an indication of the last location of each of the other mobile terminals which that mobile terminal has called. Thus, in the case of mobile terminal A, a location cache 40 is shown indicating that the last location of the mobile B was the access point 34 and the last location point of mobile terminal C is access point 32.

One feature of mobile communications networks is that the mobile terminals may roam between access points. As such, if a mobile terminal roams from a first access point to the second access point, then the location address for that mobile held by other mobiles will no longer be valid. There are two possible solutions to this:
- a pointer address to provided at the last access point to point to the access point where the mobile terminal is now located;
- the mobile terminal updates all other mobile terminals on its list of mobile terminals of its new location address. The update can be achieved either before a call attempt is made by that mobile terminal or after a call attempt is made to that mobile terminal.

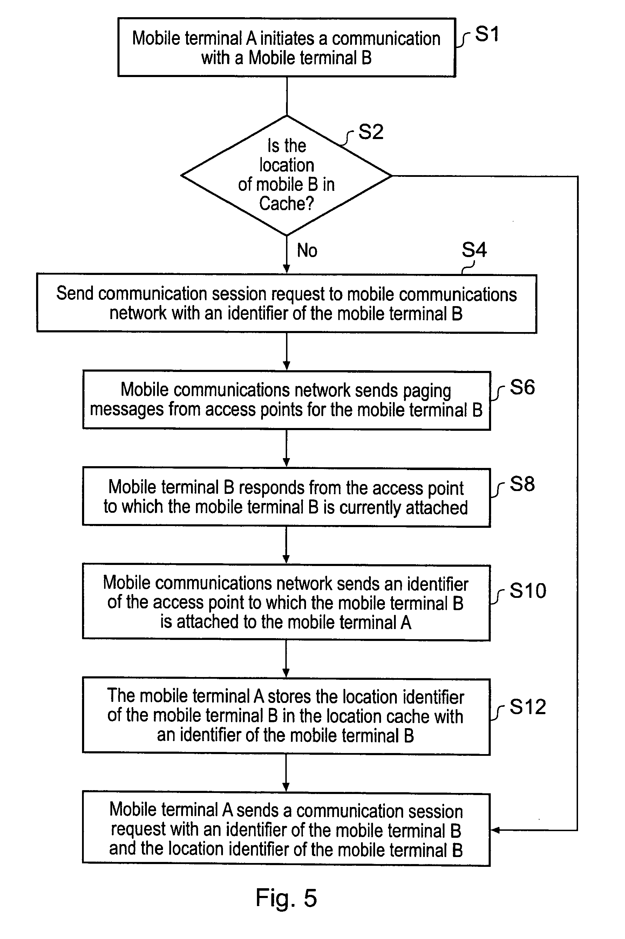

As illustrated in Figure 4, mobile terminal B changes affiliation from the access point 34 to access point 36. As a result the location cache for mobile terminal A will now be out-of-date because the mobile terminal B has moved from access point 34 to access point 36. Therefore, the location cache for mobile terminal A needs to be up-dated to identify that the mobile terminal B is now affiliated with access point 36. There are various alternative techniques for up-dating the location of the mobile terminal which has moved from a previous location. These will be described shortly. However, before describing the techniques for up-dating the location cache when a mobile terminal has moved from a previous location, a process through which the location cache for the mobile terminals is populated with the location of other mobile terminals will be described with reference to the flow diagram shown in Figure 5.

Figure 5 provides a flow diagram which establishes the operations performed by a mobile terminal in order to initiate a call with another mobile terminal. Figure 5 is summarised as follows:
S1: The mobile terminal initiates a communications session with a mobile terminal B.
S2: The mobile terminal A interrogates its location cache to determine whether there is an identifier of mobile terminal B in the cache and if so whether a location identifier is provided. If there is a location identifier for mobile terminal B in the location cache then processing proceeds to process step S 14.
S4: If the location of terminal B is not contained in the location cache then the mobile terminal sends a communication session request to the mobile communications network with an identifier of the mobile terminal B. In the GPRS/UMTS scenario the identifier of mobile terminal B will be the International Mobile Subscriber Identify number.
S6: The mobile communications network then sends a paging message from the access points of the mobile communications network with an identifier of the mobile terminal B.
S8: Mobile terminal B then responds to the paging request from the access point to which it is currently attached.
S10: The mobile communications network then sends an identifier of the access point to which the mobile terminal B is attached to the mobile terminal A, the mobile terminal B having responded to the paging request from the access point to which it is attached, the access point providing an identification code for that access point.
S12: The mobile terminal A then stores the location identifier of the mobile terminal B in the location cache with an identifier of the mobile terminal B for initiating subsequent communications.
S14: The mobile terminal A then sends a communication session request with an identifier of the mobile terminal B and the location identifier of the access point to which the mobile terminal B is attached.

Thus, the flow diagram shown in Figure 5 illustrates that even if the mobile terminal does not have the current location of mobile terminal B, this can be established by paging mobile terminal B from the access points or base stations of mobile communications network. In some examples the mobile communications network may start the paging process from a last known location of mobile terminal B and then increase the area of the paging request from the access point or base station to a location area and then to an area covered by, for example, a Visitor Location Register (VLR). Once the mobile terminal responds it will identify the access point or base station to which the mobile terminal is attached which will then be forwarded to the mobile terminal which initiated the communication session for storage in the location cache. The communication session can then be established between the initiating mobile terminal and the invited mobile terminal.

### Updating the Location Cache Following Mobility

As explained above, although the present technique provides an arrangement in which the mobile terminals are self-locating once their location has been established within the mobile communications network, advantageously techniques can be provided which allows that location to be up-dated within each of the location caches to reduce as far as possible a requirement to page for a mobile terminal. As will be appreciated, paging a mobile terminal can increase a delay required to set up a call and increase signalling required to establish the location of a mobile terminal. Therefore, if this paging operation can be reduced then an improvement will be provided in terms of the call set up time and signalling traffic over a mobile communications network. Some techniques for reducing a requirement for paging mobile terminals will now be described.

### Early/Late Caching

As illustrated in Figure 4, once the mobile terminal has changed affiliation from the access point 34 to access point 36 that mobile terminal is now aware of its new access point. Accordingly, the mobile terminal can review all the mobile terminals identified in the location cache and communicate to these mobile terminals an up-date identifying the new access point to which the mobile terminal has affiliated. Thus, as mobile terminal B changes affiliation from access point 34 to access point 36, mobile terminal B communicates with mobile terminals A and C to provide a new identifier of the access point 36 with which it is affiliated. Thus mobile terminal A updates its location cache to identify that access point 36 is indicated with the identifier of mobile terminal B within the location cache as the new location of mobile terminal B.

As an alternative no location up-date is performed. This is an example of so called "late caching". Cache up-date is not performed so that when an incoming call is placed to the mobile terminal B this will be placed to the previous location which would be access point 34. As such the call is not delivered to the mobile terminal B. As such, there are two alternatives to identifying the new location of terminal B. Either the paging operation can be performed by the network in order to identify the location of terminal B. Alternatively the mobile communications network can be provided with a visitor location register which identifies the new location of the mobile terminal.

### User Profile Replication

In this example a user profile is replicated for each mobile terminal where it is attached. This technique assumes that each user usually communicates frequently with a small number of sources. Thus at each location a user profile can be replicated. Since each user and therefore mobile terminal communicates from a small number of access points, these access points can be provided to the location cache of each of the mobile terminals which are likely to call that mobile terminal. As such, when initiating a call several location identifies can be provided and searched in turn for connecting a communication session to a mobile terminal so that it is more likely that the communication session will be established.

### Anchor Points

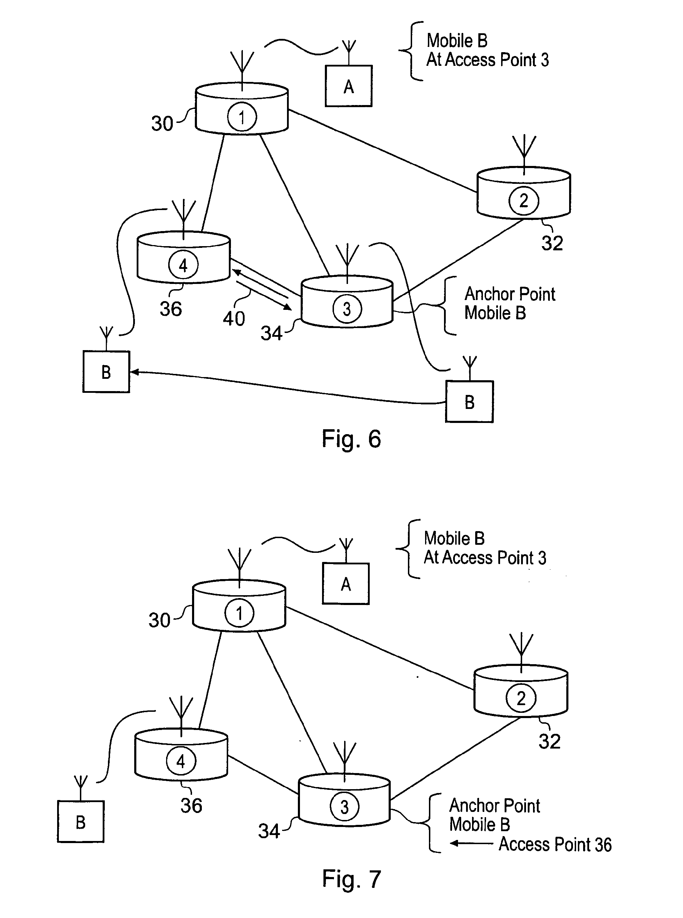

The technique for providing a location of a mobile terminal which has moved from a previous access point to a new access point which is referred to as "anchor points" will now be described with reference to Figures 5, 6 and 7. Figures 5 and 6 correspond to Figures 3 and 4 where corresponding parts have the same reference numerals. In accordance with the anchor points technique a profile of a mobile terminal is established at an access point to which it was or is usually attached. Thus for example as shown in Figure 6, if a mobile terminal roams from access point 34 to access point 36 an anchor point for mobile terminal B remains at access point 34. Once the mobile terminal B has become attached to access point 36 an exchange of signalling data represented as arrows 40 communicates the new access point to which the mobile terminal B is attached. The location identifier of that access point is communicated to the anchor point at access point 34. As shown in Figure 7, once the mobile terminal B is attached to the new access point 36 the old access point 34 which includes the anchor point for mobile terminal B includes a pointer to the access point 36. As can be seen in Figures 6 and 7 mobile terminal A includes in its location cache the access point 34 in association with an identifier of mobile terminal B. Furthermore, as shown in Figures 6 and 7 the location cache for mobile terminal A is not up-dated. That is to say the location cache includes access point 34 as the location of mobile terminal B in both Figures 6 and 7 even though the mobile terminal B has moved to access point 36.

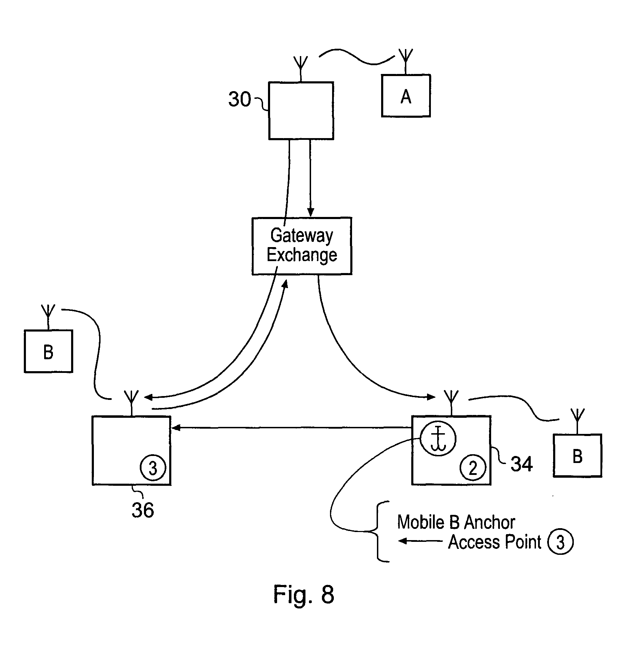

Figure 8 illustrates the process for establishing a call with mobile terminal B initiated by mobile terminal A after the mobile terminal B has moved to the access point 36. In Figure 8 the mobile terminal A initiates a call via the access point 30 through a gateway exchange which may be included within the communications network. The mobile terminal A has access point 34 as the last location of the mobile terminal B. Thus, the gateway exchange attempts to complete the call to mobile terminal B at the access point 34. However, as illustrated in Figures 6 and 7 the mobile terminal B has moved to a new access point 36. Since the call is received at access point 34 then the anchor point for mobile terminal B is interrogated to determine the location of mobile terminal B. The access point includes the anchor profile for mobile terminal B and in that anchor point a pointer to the new access point to which the mobile terminal B has moved is provided. Signalling data is therefore forwarded to access point 36 indicating that a communications session is being initiated to mobile terminal B therefore establishes the call to mobile terminal A via access point 36 by signalling via the gateway exchange 42 with the effect that the call can be completed between the access point 30 and the access point 36 between the mobile terminals A and B.

### Application to Internet Protocol Multimedia Sub-systems (IMS)

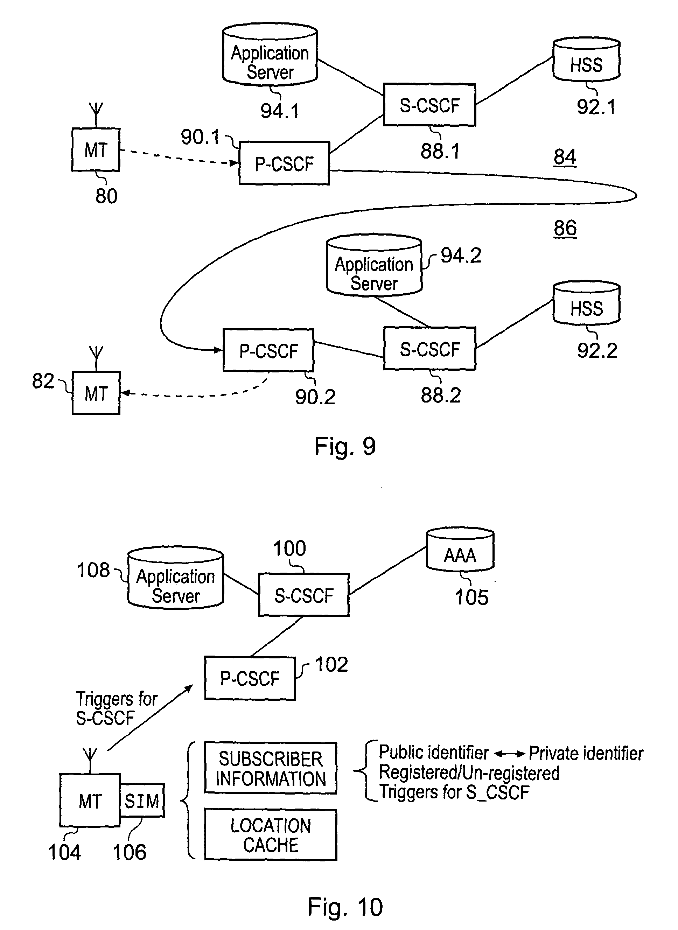

An example application of the present technique applied to Internet Protocol Multimedia Sub-systems will now be described with reference to Figures 9 and 10. In Figure 9 a conventional arrangement of an IMS sub-system, in accordance with the 3GPP standard for two mobile terminals communicating via a mobile communications network is illustrated. As those acquainted with the IMS architecture will appreciate an IP Multimedia Network Sub-system is provided to perform different functions to mobile terminals. The IMS sub-system is provided to deploy services to mobile terminals and interacts with signalling data such as for example Session Initiation Protocol messages (SIP messages). As shown in Figure 9 an IMS sub-system is provided for both a mobile terminal 80 which is initiating a communications session, and for with a mobile terminal 82, which is invited to a communications session. As shown in Figure 9 two IMS sub-systems 84, 86 are shown which receive signalling messages from the mobile terminal which is inviting the second mobile terminal 82 to a communications session. As will be familiar to those acquainted with IMS systems, the IMS system comprises a Serving Call State Control Function (S-CSCF) 88.1, 88.2, a Proxy Call State Control Function (P-CSCF) 90.1, 90.2, a Home Subscriber Server (HSS) 92.1, 92.2 and typically an application server 94.1, 94.2. Those acquainted with IMS will appreciate the operation of the various components in the IMS architecture. However, in application of the present technique the Home Subscriber Server (HSS) performs a similar function to the HLR of a mobile communications network. The HSS contains subscriber information including an indication of a current state of the user as to whether the subscriber is registered as being active or registered as being inactive, as well as other information such as triggering conditions for deploying various services which when the mobile terminal is active are downloaded from the HSS to the SCSCF and the PSCSCF. In accordance with the present technique an IMS is adapted to remove the HSS. Figure 10 provides an example application of the present technique to IMS systems.

In Figure 10 an adapted Serving Call State Control Function (S-CSCF) 100 is connected to an adapted Proxy Call State Control Function (P-CSCF) 102. As described above a mobile terminal operating in accordance with the present technique is self-locating and so includes location cache described for the aforementioned embodiments of the present technique. In addition in accordance with the present technique the mobile terminal 104 includes a SIM 106 on which is stored the subscriber information which would conventionally be stored on the HSS. Thus the subscriber information stored in the SIM includes an indication as to whether or not the mobile terminal is registered or not registered and triggering conditions for triggering services provided for example by the application server 108.

As for those familiar with IMS systems will appreciate, in the unregistered state services may be deployed to the mobile terminal such as voicemail or call forwarding. As such in accordance with the present technique triggering conditions for deploying such services are loaded on the PCSCF 102 by the mobile terminal 104 from the subscriber information stored on the SIM 106. Thus the PCSCF and the SCSCF 100,102 have been adapted to receive the triggering conditions not from the HSS but from the mobile terminal itself.

Furthermore, in accordance with the present technique the SIM 106 includes service authorisation code for deployment services to the mobile terminal which would conventionally be stored in the HSS 92.1, 92.2. In accordance with the present technique, when the mobile terminal is unregistered, the mobile terminal uploads the necessary triggering conditions to the SCSCF in order to deploy appropriate services. Likewise, when the mobile terminal is registered as being active, the mobile terminal uploads appropriate trigger conditions to the P-CSCF and for the S-CSCF.

In accordance with the present technique the subscriber information also contains both a public identifier of the mobile terminal which is issued by the home network and a private identifier of the mobile terminal which is used exclusively by the operator of the mobile terminal's home network. Thus the SIM 106 includes an association between the public identifier and the private identifier.

In accordance with the present technique the adapted IMS architecture shown in Figure 10 includes an Authorisation Authentication and Accounting server 108 which is arranged to provide the private identifier and public identifier to the mobile terminal 104 for storage on the SIM. The private user identifier which is assigned by the home network operator is used for subscription identification registration and other authorisation accounting and administration purposes. The private user identity is globally unique and permanently allocated for a user subscription. The private user identifier takes the form of a network access identifier which has a format similar to an e-mail address.

A public user identifier is allocated to the mobile terminal. The mobile terminal may have one or more public user identifiers. The public user identifier is used as the contact information for communicating with others. Different public identifiers can be used to differentiate various user scenarios for a single subscriber. For example, a personal public user identifier is used for contacts with family members and friends while a business public user identifier is known to colleagues and partners. The public user identity may take the form of a SIP URI such as SIP:userl@operatorl.com.

In operation if the mobile terminal should wish to access a communications service then the mobile terminal is arranged to confirm with the AAA server 108 that it is authorised to perform the communications service. Accordingly, signalling messages are sent to the AAA server 108 to request permission to initiate the communications service. Furthermore, to assist in the billing for communications services the PCSCF 102 provides an association between the public user identifier and the private user identifier which is used by the AAA server 108 to perform authorisation and billing.

### URL Associated SIM

A scheme according to the present technique will now be described in which a combination of a Domain Name System (DNS) and Universal Resource Locator (URL) protocol are adapted to provide an arrangement for accessing information stored in a mobile terminal, such as on a SIM, which can therefore be access via a packet data communications network. In particular the subscriber information may be accessed for example when the mobile terminal in attached to a mobile communications network. The Domain Name System is explained in more detail in Annex 1. The following sections describe examples of the technique, which can allow the information on the SIM of the mobile terminal to be accessed using a URL:

### Location Management

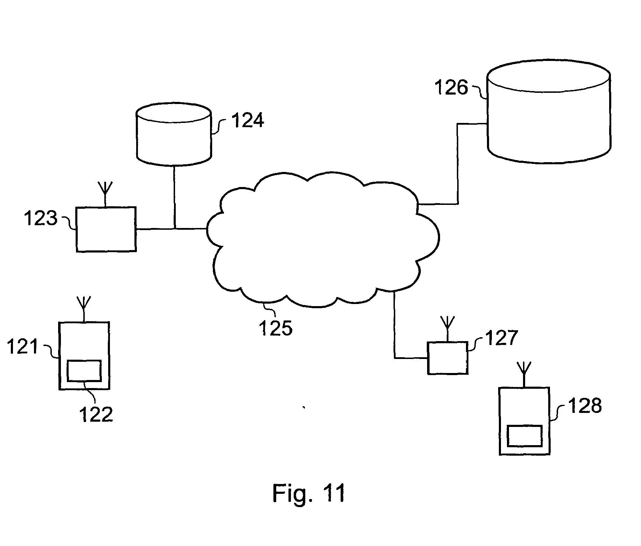

Figure 11 shows an embodiment of the present invention. A first mobile terminal 121 includes a Subscriber Identity Module (SIM) 122. The first mobile terminal 121 communicates packet data via a wireless link with an access point 123. The wireless link might operate in accordance with, for example, the "WiFi" (IEEE802.11) standard. When first establishing the wireless link between the access point 123 and the first mobile terminal 121, the mobile terminal 121 is provided with an IP address from an IP address allocation server 124. The first mobile terminal 121 is then operable to send a message to a DNS server 126 via an IP network 125 indicating an identity of the first mobile terminal 121 and the IP address that has been allocated to the first mobile terminal 121 by the IP address allocation server 124. The DNS server 126 is then operable to associate a URL (in accordance with the DNS) which has previously been associated with the identity of mobile terminal 121, with the IP address that has been allocated to the first mobile terminal 121 by the IP address allocation server 124.

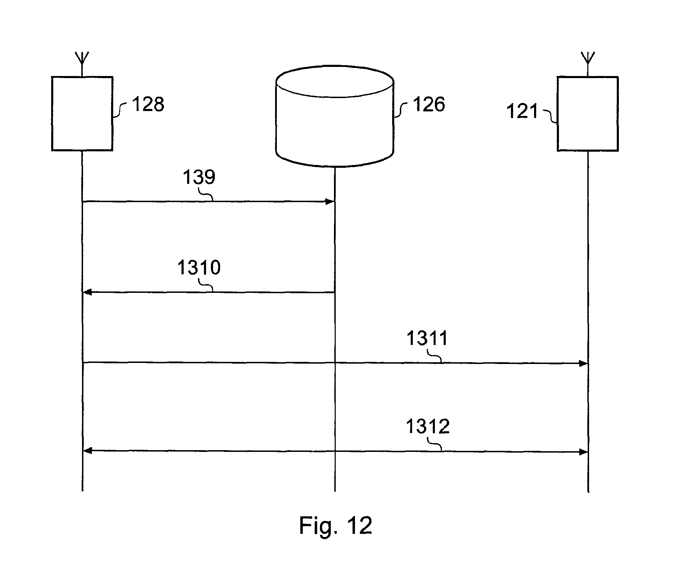

A second mobile terminal 128 is operable to communicate packet data via a wireless link to a second access point 127. Figure 12 shows a procedure for establishing a communication session, such as for example a Voice over IP (VoIP) call, between the first mobile terminal 121 and the second mobile terminal 128, originating at the second mobile terminal 128. Firstly, the second mobile terminal 128 sends a first message 139 to the DNS server 126 including the URL of the first mobile terminal 121. The DNS server 126 then looks up the IP address corresponding to the URL sent in the first message 129 (in accordance with the domain name system). This IP address is the current IP address of the first mobile terminal 121. The DNS server 126 then sends a second message 1310 to the second mobile terminal 128 including the IP address of the first mobile terminal 1. The second mobile terminal 128, equipped with the IP address of the first mobile terminal 121 then sends a third message 1311 to the first mobile terminal 121 establishing a communication session, such as for example a VoIP call. The first mobile terminal 121 and the second mobile terminal 128 are then able to communicate with each other via an established communications session 1312. In this way, a call to a mobile terminal can be routed in a mobile telecommunications network in which there is no HLR, simply by using a URL and an adapted DNS server.

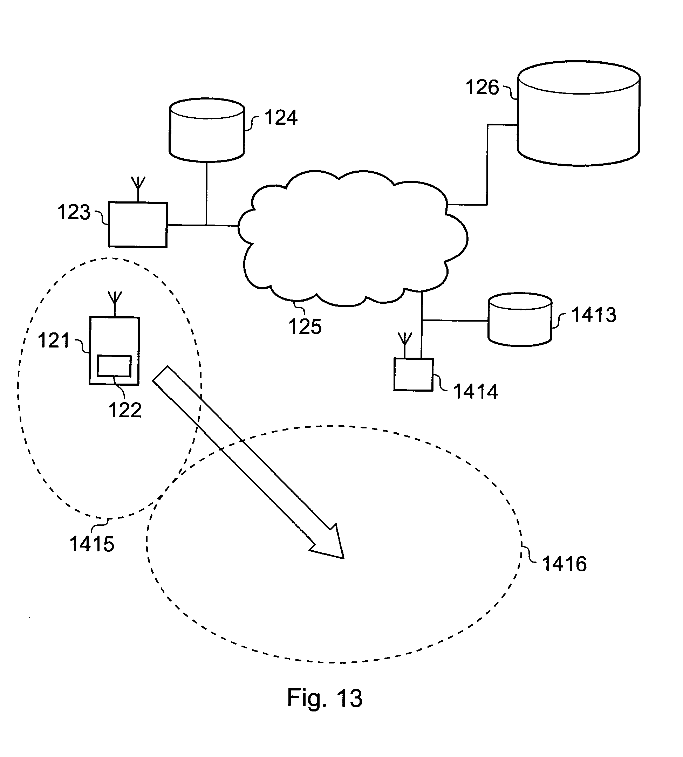

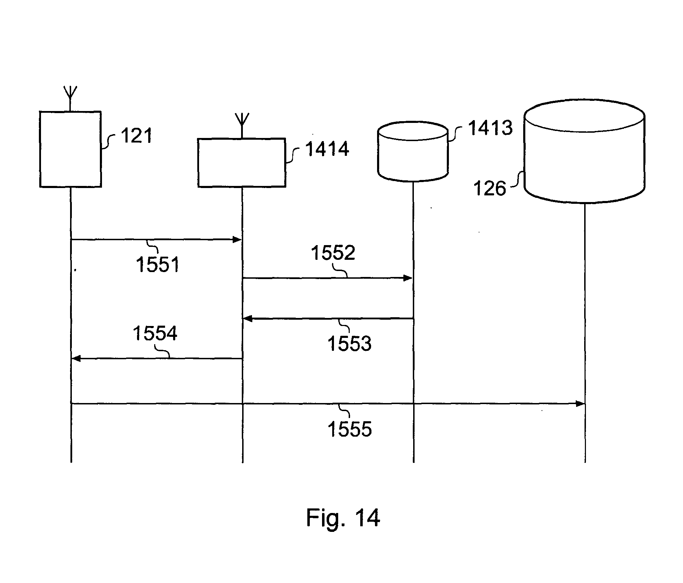

Figure 13 shows the embodiment shown in Figure 11 with a second access point 1414 and a second IP address allocation server 1413. Figure 13 illustrates a situation in which the mobile terminal 121 moves from a first coverage area 1415 provided by the first access point 123 to a second coverage area 1416 provided by the second access point 1414. Figure 14 shows a procedure for updating the DNS server 126 when the mobile terminal 121 moves from a first coverage area 1415 provided by the first access point 123 to a second coverage area provided by the second access point 1414. Upon moving into the second coverage area 1416, the mobile terminal 121 establishes a wireless link between the mobile terminal 121 and the second access point 1414. When establishing the wireless link, the mobile terminal sends an IP address request message 1551 to the second access point 1414. In response, the second access point 1414 sends an IP address allocation request message 1552 to the second IP address allocation server 1413 for an IP address to allocate to the mobile terminal 121. The IP address allocation server 1413 then sends an IP address allocation message 1553 to the second access point 1414. The second access point 1414 then sends an IP address allocated message 1554 to the mobile terminal 121 including the allocated IP address. The mobile terminal is then operable to send an update message 1555 to the DNS server 126 including an indication of the mobile terminal's 121 identity and the newly allocated IP address. The DNS server 126 is then operable to associate the URL (in accordance with the domain name system) which has previously been associated with the identity of mobile terminal.121, with the IP address that has been allocated to the mobile terminal 121 by the second IP address allocation server 1413. As has been explained, using this scheme allows the mobile terminal 121 to be located and communicated with, irrespective of which access point it might be attached to, simply by using a URL associated with the SIM 122 in the mobile terminal 121.

In the above embodiment, when establishing a communication session between the first mobile terminal 121 and the second mobile terminal 128, the DNS server 126 sends the second message 1310 to the second mobile terminal 128 including the IP address of the first mobile terminal 121. After that point, there is no further requirement for the DNS server 126 in the communication of data between the first and second mobile terminals. However, it will be appreciated that a mobile telecommunications network operator may wish to route all or some packets exchanged between the mobile terminals via some part of the DNS server 126. This would provide an opportunity for the operator to generate billing data for example. Therefore, in some embodiments, when the DNS server 126 sends a message to an originating mobile terminal with the IP address of another mobile terminal which the originating mobile terminal is attempting to route a call to, the DNS may in fact issue an IP address corresponding to a proxy node through which all packets involved in the call are routed, thus allowing an operator to monitor the communication session and account for the communications session to charge the subscriber for the services used.

### Subscriber Management

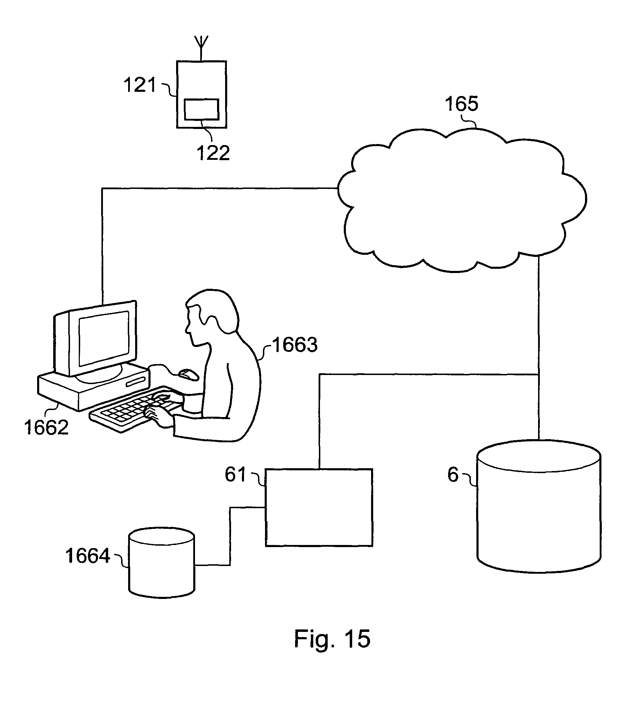

Figure 15 shows the mobile, terminal 121 and the SIM 122. Also shown is a user 1663 with access to a personal computer 1662 connected to an IP network 165. The DNS server 126 and a provisioning server 1661 are also connected to the IP network 165. If the user 1663 wishes to provision a service for the SIM 122, for example allowing access to an operator's mobile telecommunication network, the user 1663 enters a URL associated with the SIM 122 (for example http://www.orange.co.uk/0712345678/provisioning) into an application running on the personal computer 1662, for example a web browser. The web browser, according to the domain name system will then send a request to the DNS server 126 requesting an IP address associated with the URL associated with the SIM 122. The DNS server is then operable to return an IP address corresponding to the provisioning server 1661. The provisioning server 1661 and the application running on the personal computer 1662 are then able to establish a communication session in which information is transmitted between them. A provisioning data base is 1664 is connected to the provisioning server 1661. The provisioning data base stores information indicating services provisioned for SIMs subscribed to an operator's mobile telecommunication network. During the communication session established between the personal computer 1662 and the provisioning server 1661, information indicating services provisioned for the SIM 122 could be sent from the provisioning database to the personal computer 1662. Further, additional services or changes to current services could be negotiated between the user 1663, via the personal computer 1662, and the provisioning server 1661. In some embodiments personal computer is the mobile terminal.

### SIM based Services

Typically, in order to manage subscribers to a mobile network, the mobile network operator issues each subscriber with a subscriber identity module (SIM) which is integrated into the user's device. Each SIM has a unique identifier associated with it and it is this identifier which is used in the HLR to identify individual users. In order to provide an arrangement in which the HLR or an equivalent functionality can be removed from a mobile communications network architecture, the subscriber information is arranged to be stored in the mobile terminal, such as for example on the subscriber identity module (SIM). The subscriber information may include an indication of the services to which the subscriber has subscribed (authorisation data), a mobile subscriber identity number uniquely identifying the mobile terminal, and other information which might conventionally be stored in the HLR.

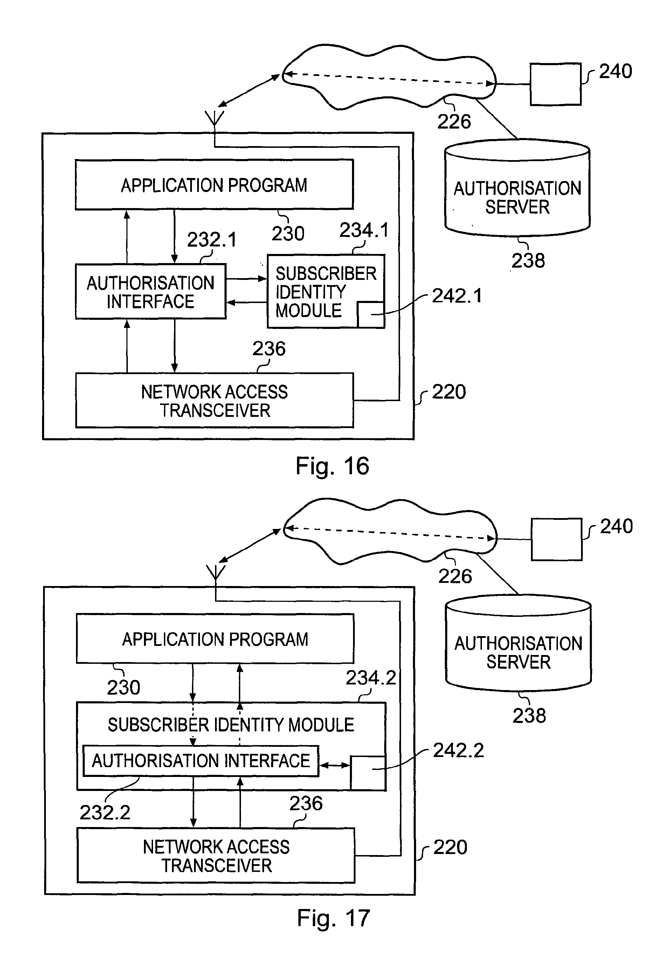

Figure 16 provides an example of a communications terminal which has been adapted in accordance with the present technique, which for the present example is a mobile terminal. In Figure 16 the mobile terminal 220 includes an application processor 230, which operates to execute application programs within an application layer, an authorisation interface 232.1 which interfaces with a subscriber identity module 234.1 and a network access transceiver 236. The network access transceiver 36 may be enabled to communicate data via different access networks and so may include data processors which are arranged to communicate via different access technologies such as WiFi, Bluetooth, GPRS, WCDMA in accordance with UMTS or any other interface standard as appropriate. The application processor 230 may be arranged to execute different application programs to provide different communications services to the subscriber. The terms application program and application processor may be used interchangeably in the following description.

Conventionally, once a mobile terminal for example has roamed to within a radio coverage area of a particular access network, such as WiFi, GSM or 3G/GPRS, the mobile terminal registers with that access network or attaches in some way for the communication of data via that access network to support a particular communications service. The access network in Figure 16 is represented generally as a cloud 226. Attached to the access network 226 is an authorisation server 238 operating in accordance with the present technique. In accordance with a conventional operation, if a subscriber launches an application program 230 at the application layer to provide a particular communications service then data must be communicated via the access network 226 using the network access transceiver 236 to provide that communications service. For example, if the communications service is voice over IP (VoIP), the application program is launched and using internet protocol packets, data representing encoded voice signals is communicated within the internet packets using the network access transceiver 236 via the access network 226, which may be for example a WiFi network to and from a correspondent terminal 240. However, there may be operational reasons why it is necessary to restrict the communications services which can be deployed and/or the access networks which can be used by a particular subscriber. For example, in order to ensure that a quality of communications provided to a subscriber are at a sufficient level, the telecommunications operator may wish to restrict the access networks through which the subscriber can communicate and/or the communications services which can be deployed to the subscriber. Alternatively, the telecommunications operator may charge differently depending on the communications service or the access network which is being used to support the communications service.

As shown in Figure 16 the communications terminal 220 includes an authorisation interface 232.1. In accordance with the present technique the authorisation interface 232.1 controls access of the application program 230 to the network access transceiver 236 in accordance with predetermined conditions for providing that communications service and/or use of the access network for supporting the communications service. The predetermined conditions may therefore include whether the telecommunications operator has procured access networks to support the communications service required by the subscriber, whether the subscriber has subscribed to the use of that communications service and whether the telecommunications operator has concluded an agreement with an operator of the access network via which the communications terminal is to communicate data to support the communications service. There are various arrangements for providing that information to the mobile terminal from the authorisation server 238, such as regular updates, on initiation of a communications session or whenever the mobile terminal attaches to a particular network. This information will be referred to as authorisation data.

In one example the authorisation data is stored in a data store 42 on the subscriber identity module 34 in a secure portion. Thus, in accordance with the present technique the subscriber identity module (SIM) includes an encryption/decryption processor as well as a secure hardware store within which the authorisation data 42 can be stored. Such features are conventionally available on a so called "smart card".

In addition to the authorisation data, other subscriber information which is conventionally stored in the HLR may be distributed to the mobile terminal, for storage, for example on the SIM. For the example shown in Figure 16, the authorisation interface 232.1 is provided as a software element within the communications terminal 220. For example the authorisations interface 232.1 could be an application programmer's interface. Thus whereas conventionally the application program 230, would interface with the network access transceiver 236, in accordance with the present technique the interface with the network access transceiver must go via the authorisation interface 232.1. The authorisation interface 232.1 then interrogates the authorisation data held on the subscriber identity module 34.1 to determine whether or not a particular communications service has been authorised to the subscriber, whether a particular access network has been authorised to the subscriber and if so an appropriate tariff for charging the subscriber for using the communications service and/or the access network. Thus, as will be explained shortly, both the use of that communications service and the access network is determined by the authorisation interface 232.1 and this information may be stored on the subscriber identity module 234.1. Similarly, the authorisation data which identifies the conditions for receiving communication services and/or using particular access networks is communicated from the application server 238 to the communications terminal 20 and stored by the subscriber identity module 234.1 in the secure store 242.1. Caching the authorisation data locally on the SIM reduces latency in accessing the network by providing temporary authorisation and accounting. At convenient times, the authorisation interface 232.1 communicates transparently and securely with the authorisation server 238 to confirm authorisation and to transfer incremental accounting data.

An alternative arrangement is shown in Figure 17. Figure 17 corresponds substantially to the arrangement shown in Figure 16 except that the authorisation interface 232.2 is provided within the subscriber identity module 234.2. Thus the subscriber identity module 234.2 contains the authorisation interface 232.2, which may be for example an application programmer's interface. In accordance with the present technique providing the authorisation interface 232.2 on the subscriber identity module 34.2 improves security in storing the authorisation data and usage data (described shortly) to the effect that it is more difficult for an unscrupulous subscriber to hack the authorisation data to gain access to services for which a subscriber has not been authorised or the telecommunications operator has not procured access to a particular access network.

The arrangement provides a number of advantages to an operator of a telecommunications network which has provided subscribers to its services with a mobile terminal which can gain access to unregulated network access technologies such as WiFi, Bluetooth, or infra red, via a network access transceiver provided in the mobile terminal.

For example, by adopting the scheme set out above, the telecommunications network operator can enable subscribers to gain access to a number of different network access technologies (such as GPRS/GSM, WiFi, Bluetooth, WiMax, Infra-red etc) using only one common authorisation/attachment procedure - i.e. that provided in the authorisation interface. This would provide subscribers with added convenience as it would overcome the requirement to arrange separately the authorisation/attachment for each different network access technology they intended to use. Furthermore, the telecommunications network operator may wish to monitor or control access by its subscribers to certain unregulated network access technologies to ensure a user is not exposed to a quality of service which is below an acceptable level. Authorisation interface in the mobile terminal is an interface through which access can be provided to the unregulated network access technologies. Whenever an attempted access to an unregulated access technology is made by an application program running on the mobile terminal, a voice over IP (VoIP) client for example, the authorisation interface sends a message to an authentication server controlled by the telecommunications operator. The message comprises data representing the identity of the SIM and the identity of the application program. Therefore the telecommunications operator is assisted in taking an appropriate action.

The appropriate action might include simply noting details of the attempted access to the unregulated network or generating billing data to be associated with the subscriber identified by the SIM. Appropriate action might also include sending a response back to the handset informing the subscriber they are about to gain access to an unregulated network access technology and an expected quality of service might not be guaranteed.

The message generated by the authorisation interface might also allow the telecommunications operator to apply differential billing based on the application program according to which the network access transceiver is being operated. For example, the network operator might provide a preferred application program for VoIP which would be billed at a different rate than a non preferred application program for VoIP provided by a third party.

As mentioned above, in one example, the authorisation interface is provided in the SIM and therefore the handset cannot be used to gain access to unregulated network access technologies without the SIM provided by the telecommunications operator. In this example, details of the authorisation interface may be provided to third parties so that they may develop application programs that can be run on the mobile terminal. This is particularly desirable as the telecommunications operator remains in control of which third parties can provide application programs.

Various further aspects and features of the present invention are defined in the appended claims. Various modifications can be made to the embodiments herein described without departing from the scope of the present invention. For example, although GSM/GPRS network standards have been referred to throughout the description, embodiments of the invention also apply to other packet radio telecommunications systems such as cdma2000, EVDO, IS-95, WiMax, WiMAN etc. Furthermore, evolution and alteration of these standards would not preclude the application of embodiments of the invention.

### Annex 1: URL and DNS

A Universal Resource Identifier (URL) is a label which identifies the name and location of a resource on an internet network. An example URL is:
http://www.orange.co.uk/example_resource
This example URL comprises three distinct parts:
- http: // - This refers to the access *scheme or protocol* according to which the resource is to be accessed. Other examples include ftp://, mailto://, https : //, etc.
- www.orange.co.uk - This refers to the *host* (i.e. server) domain name in which the resource is located
- /example_resource - This refers to the *path* (or location) to the resource within the host.

To retrieve the resource example_resource specified by the URL http: //www.orange.co.uk/example_resource, an internet browser application could be used. Typically a user will enter the URL into the internet browser application. The browser is then provided with an instruction that amounts to a request to retrieve the resource using the http protocol which is found at www.orange. co.uk/example_resource. However, before the resource can be retrieved, an IP address identifying the host www.orange.co.uk must be established. This is achieved using a Domain Name System (DNS) server.

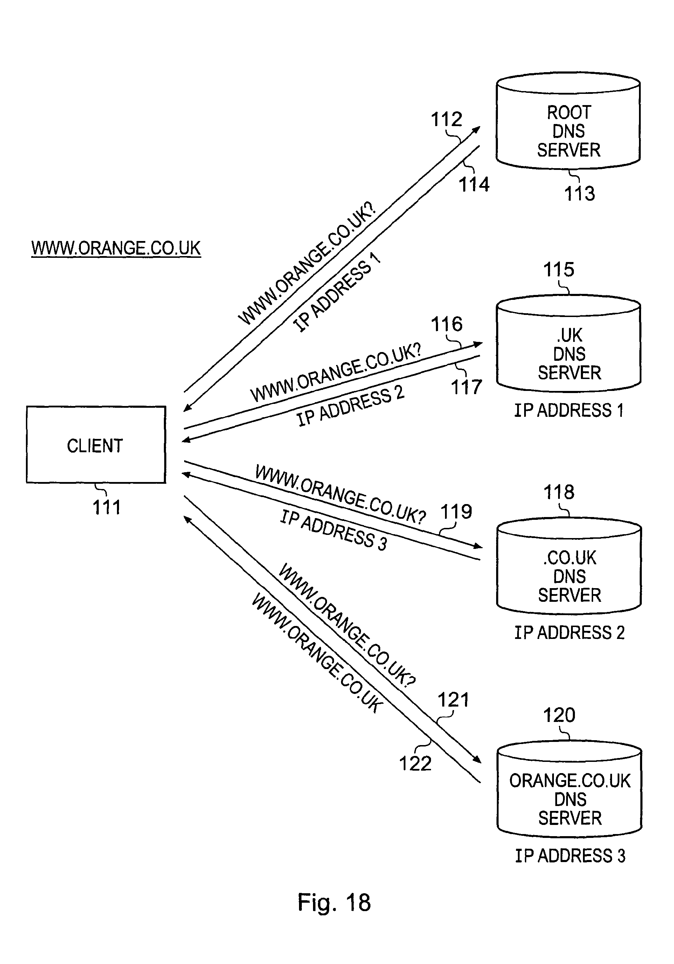

The domain name system is a system that translates "domain names" (i.e. computer host names) into IP addresses. Figure 18 shows a simplified example of how the domain name system works. As described above, the client application 111, such as an internet browser, wishes to establish the IP address identifying the host www.orange.co.uk. The client 111 first sends a first query 112 to a default root DNS server 113 requesting the IP address associated with www.orange.co.uk. Assuming the root DNS server 113 does not have any information cached associated with www.orange.co.uk, the client 111 will typically engage in a hierarchical process to discover the IP address. The root DNS server 113 sends a first response message back to the client with IP address 1 of the .uk DNS server 115. The client 111 then sends a second query 116, to the .uk DNS server 115 requesting the IP address associated with www.orange.co.uk. Assuming the .uk DNS server 115 does not have any information cached associated with www.orange.co.uk, it sends a second response message 117 back to the client with IP address 2 of the .co.uk DNS server 118. The client 111 then sends a third query 119 to .co.uk DNS server 118 requesting the IP address associated with www.orange.co.uk. The .co.uk DNS server 118 then returns IP address 3 which should correspond to the host name www.orange.co.uk. The client may then be operable to exchange confirmation messages 121, 122 with the .orange.co.uk DNS server 120.

Returning now to the URL, when the internet browser application is provided with the IP address corresponding to the host's domain name, the internet browser can send a request message to the host (www.orange.co.uk) requesting the transmission of the resource (example_resource) identified and located by the URL (www.orange.co.uk/example_resource), using the http protocol.

## Claims

**1.** A mobile telecommunications system, comprising
a mobile communications network operable to provide a facility for mobile terminals to communicate via a plurality of inter-connected access points,
a first mobile terminal operable to initiate a communications session with a second mobile terminal by sending a communication initiation message with an identification of the second mobile terminal to the mobile communications network via a first of the plurality of access points to which the first mobile terminal is attached, the mobile communications network being operable to communicate the communication initiation message to the second mobile terminal via the first or a second of the plurality of access points to which the second mobile terminal is attached, the second mobile terminal being responsive to the communication initiation message,
to communicate a location identifier, identifying the location of the second mobile terminal, when attached to the first or the second access point of the mobile communications network, to the first mobile terminal, the first mobile terminal being operable to store the location identifier of the first or the second access point of the mobile communications network to which the second mobile terminal is attached in association with an identification of the second mobile terminal, for locating the second mobile terminal when initiating subsequent communications sessions.

**2.** A mobile telecommunications system as claimed in Claim 1, wherein the communication initiation messages includes a location identifier, which identifies the first access point in the mobile communications network where the first mobile terminal is attached, the second mobile terminal being operable to store the location identifier of first access point in association with an identification of the first mobile terminal.

**3.** A mobile telecommunications system as claimed Claim 1 or 2, wherein the mobile communications network is operable, in response to the communication initiation message to communicate a paging message to the second mobile terminal via one or more of the plurality of access points of the mobile communications network, including the second access point, the second mobile terminal being responsive to the paging request to accept the communications session initiation via the first or the second access point to which the second mobile terminal is attached to the mobile communications network, the second mobile terminal being operable to provide the first mobile terminal with the location identifier identifying the second access point of the mobile communications network.

**4.** A mobile telecommunications system as claimed in Claim 1, 2 or 3, wherein the second mobile terminal is operable, in response to the second mobile terminal roaming from the first access point to a third access point, to communicate a new location identifier, which identifies the third access point of the mobile network to which the second mobile terminal is attached, to at least the first mobile terminal, the first mobile terminal being operable to store the location identifier of the third access point in association with an identifier of the second mobile terminal.

**5.** A mobile telecommunications system as claimed in Claim 1, 2 or 3, wherein, in response to the second mobile terminal roaming from the second access point to attach to a third access point of the mobile communications network, the mobile communications network is operable
in response to the communications initiation message received from the first mobile terminal, to attempt to initiate a communication session by communicating the communications session initiation message to the second mobile terminal at the location identifier of the second access point,
to identify that the communication initiation message was not received by the second mobile terminal, which has roamed from the second access point to the third access point,
to identify a new location identifier, which identifies the third access point of the mobile network to which the second mobile terminal is attached,
to communicate the communication initiation message to the second mobile terminal at the third access point, and the second mobile terminal is operable
to communicate the location identifier of the third access point to at least the first mobile terminal, the first mobile terminal being operable to store the location identifier of the third access point to which the second mobile terminal is attached in association with an identifier of the second mobile terminal.

**6.** A mobile telecommunications system as claimed in Claim 1, 2 or 3, wherein the second mobile terminal is operable, in response to the second mobile terminal roaming from the second access point to a third access point, to provide the second access point with an address pointer which identifies the location of the second mobile terminal when attached to the third access point, the mobile communications network being operable to forward the communication initiation message from the first mobile terminal to the second mobile terminal via the second access point using the address pointer.

**7.** A mobile telecommunications system as claimed in Claim 6, wherein the second mobile terminal is operable, in response to the second mobile terminal roaming from the third access point to a fourth access point, to provide the third access point with a second address pointer which identifies the location of the second mobile terminal when attached to the fourth access point, the mobile communications network being operable to forward the communications initiation message to the second mobile terminal via the third access point using the first address pointer, which identifies the third access point and the second address pointer provided by the third access point which identifies the fourth access point.

**8.** A mobile telecommunications system as claimed in any preceding Claim, wherein the location identifier includes one of a base station code, a sub-net address or an access point address for identifying the access point to which the first or second mobile terminals are attached.

**9.** A mobile telecommunications system as claimed in any preceding Claim, wherein each of the mobile terminals includes a subscriber identity module on which is stored subscriber information including an indication of the services to which a subscriber has subscribed, and the first mobile terminal being operable to determine from the subscriber information stored on the subscriber identity module whether the subscriber has subscribed to the communications session which is being initiated by the communications initiation message.

**10.** A mobile telecommunications system as claimed in any preceding Claim, including an internet protocol multi-media sub-system, the internet protocol multi-media sub-system including
a call state control function operable in combination with an application server to deploy services to the mobile terminals in accordance with whether the mobile terminals are registered as being active or not active and triggering conditions specifying conditions which are to be satisfied in order for the services to be deployed, wherein the triggering conditions are stored on the subscriber identity module of the first or second mobile terminal and the first or second mobile terminals are operable to load the triggering conditions from the subscriber identity module to the call state control function for deploying the services.

**11.** A mobile telecommunications system as claimed in Claim 10, wherein the subscriber identity module includes a public identifier of the mobile terminal which is issued by the home network and a private identifier of the mobile terminal which is used exclusively by the operator of the mobile terminal's home network.

**12.** A method of providing a communications facility to mobile terminals via a plurality of inter-connected access points of a mobile communications network, the method comprising
initiating a communications session from a first mobile terminal with a second mobile terminal, the initiating the communications session including
sending a communication initiation message with an identification of the second mobile terminal to the mobile communications network via a first of the plurality of access points to which the first mobile terminal is attached,
communicating the communication initiation message to the second mobile terminal via the first or a second of the plurality of access points to which the second mobile terminal is attached,
communicating a location identifier, from the second mobile terminal to the first mobile terminal, in response to the communication initiation message, the location identifier identifying the location of the second mobile terminal, when attached to the first or the second access point of the mobile communications network, and
storing, in the first mobile terminal, the location identifier of the first or the second access point of the mobile communications network to which the second mobile terminal is attached in association with an identification of the second mobile terminal, for locating the second mobile terminal when initiating subsequent communications sessions.

**13.** A mobile terminal operable to communicate with at least one other mobile terminal via a mobile communications network, the mobile communications network being operable to provide a facility for the mobile terminals to communicate via a plurality of inter-connected access points, wherein
the mobile terminal is operable
to initiate a communications session with the other mobile terminal by sending
a communication initiation message with an identification of the other mobile terminal to the mobile communications network via a first of the plurality of access points of the mobile communications network to which the mobile terminal is attached,
to receive, in response to the communication initiation message, a location identifier from the mobile communications network, identifying the location of the other mobile terminal, when attached to the first or a second of the plurality of access points of the mobile communications network, and
to store the location identifier of the second access point of the mobile communications network to which the other mobile terminal is attached in association with an identification of the second mobile terminal, for locating the other mobile terminal when initiating subsequent communications sessions.

**14.** A method of communicating with at least one other mobile terminal via a mobile communications network, the mobile communications network being operable to provide a facility for the mobile terminals to communicate via a plurality of inter-connected access points, the method comprising
initiating a communications session with the other mobile terminal by sending a communication initiation message with an identification of the other mobile terminal to the mobile communications network via a first of the plurality of access points of the mobile communications network,
receiving, in response to the communication initiation message, a location identifier from the mobile communications network, identifying the location of the other mobile terminal, when attached to a second of the plurality of access points of the mobile communications network, and
storing the location identifier of the second access point of the mobile communications network to which the other mobile terminal is attached in association with an identification of the second mobile terminal, for locating the other mobile terminal when initiating subsequent communications sessions.

**15.** A computer program providing computer executable instructions, which when loaded onto a computer causes the computer to computer to perform the method according to Claims 12 or 14.

**16.** A medium bearing the computer program according to Claim 15.

**17.** A mobile telecommunications system, comprising
one or more mobile communications networks, each of the mobile communications networks including a plurality of access points,
an identification server, and
one or more mobile terminals operable to communicate data via the plurality of access points, each of the one or more mobile terminals including a subscriber identity module, the subscriber identity module having stored thereon subscriber information associated with a user of the mobile terminal, wherein the identification server is arranged to store
for each of the subscriber identity modules an internet protocol address of the subscriber information stored on the subscriber identity module of each of the mobile terminals, and
for each of the subscriber identity modules a resource locator, the resource locator being stored in association with the internet protocol address of the subscriber information on the subscriber identity module for accessing the subscriber information using the resource locator referred to the identification server, which provides the internet protocol address of the subscriber information.

**18.** A mobile telecommunications system as claimed in Claim 17, wherein the resource locator for each of the subscriber identity modules includes a data field, which identifies the identification server to the effect that the resource locator can be referred to the identification server for accessing the subscriber information stored on the subscriber identity module using the internet protocol address.

**19.** A mobile telecommunications system of Claim 17 or 18, wherein the one or more of the mobile terminals are attach to the access points of the mobile communications networks for communicating data, and the access points are operable to provide the internet protocol address of the subscriber information stored on the subscriber identity module of each of the mobile terminals to the identification server in accordance with the access point of the communications network to which the mobile terminals are attached.

**20.** A mobile telecommunications system of Claim 17, 18 or 19, comprising
a computer providing a web browser for accessing an internet, wherein the computer is operable under user control to refer the resource locator to the identification server to access the subscriber information on the subscriber identification module, the identification server retrieving the internet protocol address to provide access to the subscriber information by the web browser.

**21.** A mobile telecommunications system as claimed in any of Claims 17 to 20, wherein
the subscriber information includes information representing a user profile and/or an indication of network services.

**22.** A mobile telecommunications system as claimed in any of Claims 17 to 21, wherein the identification server is a domain name server.

**23.** A method of accessing information stored on a subscriber identity module of a mobile terminal, the subscriber identity module having stored thereon subscriber information associated with a user of the mobile terminal, the mobile terminal being arranged to communicate via one or more mobile communications networks, each of the mobile communications networks including a plurality of access points, the method comprising
storing on an identification server, an internet protocol address of the subscriber information stored on the subscriber identity module,
storing for each of the subscriber identity modules a resource locator, the resource locator being stored in association with the internet protocol address of the subscriber information on the subscriber identity module, and
accessing the subscriber information using the resource locator referred to the identification server, which provides the internet protocol address of the subscriber information.

**24.** A method as claimed in Claim 23, wherein the resource locator for each of the subscriber identity modules includes a data field, which identifies the identification server to the effect that the resource locator can be referred to the identification server.

**25.** A method as claimed in Claim 23 or 24, wherein the one or more of the mobile terminals are attached to the access points of the mobile communications networks, the method comprising
providing the internet protocol address of the one or more mobile terminals communicating data via the access point of the mobile communications network to which the mobile terminal is attached, and
sending data to the identification server from the one or more mobile terminals indicating the internet protocol address provided to the mobile terminal by the access point, for storing in association with the resource locator for the subscriber information.

**26.** An identification server, wherein the identification server is arranged to store
for each of a plurality subscriber identity modules, an internet protocol address of subscriber information stored on a subscriber identity module of each of the mobile terminals, and
for each of the subscriber identity modules a resource locator, the resource locator being stored in association with the internet protocol address of the subscriber information on the subscriber identity module for accessing the subscriber information using the resource locator referred to the identification server, which provides the internet protocol address of the subscriber information.

**28.** An identification server as claimed in Claim 27, wherein the resource locator for each of the subscriber identity modules includes a data field, which identifies the identification server to the effect that the resource locator can be referred to the identification server for accessing the subscriber information stored on the subscriber identity module using the internet protocol address.

**29.** An identification server as claimed in Claim 27 or 28, wherein the identification server is operable
to provide an internet protocol address to the one or more mobile terminals communicating data via the access point of one of the plurality of access points, and
to send data to the identification server from the one or more mobile terminals indicating the internet protocol address provided to the mobile terminal by the access point, for storing in association with the resource locator for the subscriber information.

**30.** A computer program providing computer executable instructions, which when loaded onto a computer causes the computer to computer to perform the method according to Claims 23, 24 or 25.

**31.** A medium bearing the computer program according to Claim 30.
